# EUROPÄISCHE PATENTANMELDUNG

(11) **EP 0 580 057 A2**
(43) Veröffentlichungstag der Anmeldung: **26.01.1994**
(21) Anmeldenummer: 93111156.1
(22) Anmeldetag: 13.07.1993
(51) Int. Cl.: F23J 15/00, F23L 17/02

(54) **Rauchgasreinigungssystem mit modularem Filtersystem für Kamine von Kleinfeueranlagen**

(30) Priorität: 18.07.1992 DE 4223774
(71) Anmelder: Löbbert, Sonja, D-48161 Münster (DE)
(72) Erfinder: Löbbert, Sonja, D-48161 Münster (DE)
(74) Vertreter: Schulze Horn, Stefan, Dipl.-Ing. M.Sc.

(57) **Zusammenfassung**

Rauchgasreinigungssystem mit in einem Gehäuse (10) übereinander angeordnete Filterbaueinheiten (11, 12, 13) für Filtergut, sowie einen unterhalb der Filterbaueinheiten angeordneten Ventilator (14), wobei der Unterrand des Gehäuses (10) einen Abstand vom Kaminoberrand für einen natürlichen Luftdurchfluß aufweist.

Das neue Rauchgasreinigungssystem ist dadurch gekennzeichnet, daß mindestens eine Filterbaueinheit (11, 12, 12) ein biologisch wirksamer Filter (13) mit mit Bakterien angereichertem Humus als Filtergut ist und daß das biologisch wirksame Filter (13) mit Wasser der Art berieselbar ist, daß die Abgastemperatur maximal ca. 65°C ist.

## Beschreibung

Die vorliegende Erfindung befindet ein Rauchgasreinigungssystem nach dem Oberbegriff des Patentanspruches 1.

Es ist bereits ein Rauchgasreinigungsaufsatz für Kamine von Kleinfeueranlagen nach der DE-OS 25 49 888 bekannt. Nachteilig ist bei diesem Aufsatz, daß der Ventilator strömungsmäßig hinter den Filtereinschüben angeordnet ist und daß daher für den Fall, daß der Ventilator ausfällt, aufwendige und störanfällige Maßnahmen für die Möglichkeit zu treffen sind, daß die Rauchgase auch ohne den Ventilatorzug aus dem Kamin austreten können. Ohne diese Maßnahmen besteht die Gefahr, daß der Betreiber der Kleinfeueranlage eine Kohlenmonoxidvergiftung erleidet.

Weiter weisen bekannte Rauchgasreinigungsaufsätze den Nachteil auf, daß eine vollständige Reinigung nicht sicher gewährleistet ist und daß es leicht zu einer Überladung des Filtermaterials kommen kann.

Es ist auch mit der Patentanmeldung P 42 09 225.6 ein Rauchgasreinigungsaufsatz vorgeschlagen worden, mit modularem Filtersystem, der in einem Gehäuse übereinander angeordnete Filtereinschübe für körniges Filtergut sowie einen Ventilator für das Rauchgas aufweist, wobei der Ventilator unterhalb der Filtereinschübe angeordnet ist und wobei der Unterrand des Gehäuses einen Abstand vom Kaminoberrand aufweist und einen natürlichen Luftdurchfluß gewährt.

Nachteilig ist auch bei dieser Patentanmeldung, daß die Rauchgasreinigung bei relativ hohen Temperaturbereichen durchgeführt wird.

Es ist eine Aufgabe der vorliegenden Erfindung, ein Rauchgasreinigungssystem zu schaffen, daß eine effektive Reinigung des Rauchgases gewährleistet und bei niedrigen Temperaturen arbeitet.

Die Lösung der Aufgabe erfolgt mit einem gattungsgemäßen Rauchgasreinigungssystem mit den kennzeichnenden Merkmalen des Patentanspruches 1.

Dadurch, daß mindestens eine Filterbaueinheit ein biologisch wirksamer Filter mit mit Bakterien angereichertem Humus als Filtergut ist, wird eine äußerst wirksame Reinigung des Rauchgases erreicht, wobei das erfindungsgemäße Rauchgasreinigungssystem vorzugsweise für Kleinfeuerungsanlagen bis 150 KW-Leistung einsetzbar ist.

Die erfindungsgemäß vorgesehene Berieselung des biologisch wirksamen Filters mit Wasser senkt einerseits durch Kühlung die Abgastemperatur auf einen Bereich von maximal 65°C und hält andererseits das Filtergut biologisch aktiv.

Vorteilhaft weist dazu das Rauchgasreinigungssystem oberhalb des biologisch wirksamen Filters mindestens eine Rohrleitung mit nach unten gerichteten Düsen zur Berieselung des biologisch wirksamen Filters mit Wasser auf. Zweckmäßig ist außerdem vorgesehen, daß unter dem biologisch wirksamen Filter mindestens eine nach oben gerichtete Düse zur Befeuchtung des Luftstromes angeordnet ist.

Erforderlichenfalls kann das Filtergut des biologisch wirksamen Filters mit Füllkörpern aus biologisch inaktivem Kunststoff vermischt werden.

Zur Vorreinigung der Rauchgase weist das Rauchgasreinigungssystem zweckmäßig unterhalb des biologisch wirksamen Filters ein Staub- und Rußfiltersystem als Vorabscheider auf, welches für Reinigungszwecke entnehmbar ist.

Zur Unterstützung des Kaminzuges ist es vorteilhaft, daß oberhalb oder zwischen den Filterbaueinheiten ein zweiter Ventilator angebracht ist.

Eine vorteilhafte Ausgestaltung sieht vor, daß die Decke des Rauchgasreinigungssystems aus lichtdurchlässigem, regendichtem Material besteht und sich darunter ein bepflanzbarer Freiraum mit Regenwasserzutrittsdüsen und einem Abfluß befindet.

Zur Optimierung der Rauchgasströmung ist es zweckmäßig, daß strömungsmäßig hinter dem Staub- und Rußfiltersystem ein das Gas gleichrichtendes Membransystem vorhanden ist.

Weiter ist es zweckmäßig, daß das Gehäuse nach oben oder wahlweise nach unten konisch verläuft, um die Gasführung günstig zu beeinflussen.

Zur Automatisierung des Rauchgasreinigungssystems ist es vorteilhaft, daß das Gehäuse mindestens einen Biosensor und/oder einen Feuchtigkeitssensor und/oder einen Temperatursensor aufweist. Die von den Sensoren aufgenommenen Meßwerte können in später behandelten Ausgestaltungen der Erfindung zur Regelung des Systems verwendet werden.

Zur Vereinfachung der Wartungsarbeiten ist es zweckmäßig, daß neben dem Rauchgasreinigungssystem zwei herausziehbare Stangenhalterungen für die Auflage von zu wechselnden Filtern vorhanden sind.

Weiter ist es für Wartungsarbeiten zweckmäßig, daß die Filterbaueinheiten Indikatoren zur Feststellung ihres Ladezustandes aufweisen.

Zur Sicherung der von den Sensoren aufgenommenen Meßdaten und eventuellen Weitergabe an Aufsichtsbehörden ist es zweckmäßig, daß die von den Sensoren aufgenommenen Meßdaten in ein Datenbanksystem eingebbar sind.

Zur Feinregelung des Systems ist es zweckmäßig, daß mindestens ein Ventilator über mindestens einen Sensor regelbar ist, wobei sowohl die Drehgeschwindigkeit des Ventilators als auch die Einschalt- und Ausschaltfunktion regelbar ist.

Alternativ ist es zweckmäßig, daß mindestens ein Ventilator über eine Schaltuhr für eine vorwählbare Zeit ein- und ausschaltbar ist, wobei beispielsweise eine Nachlaufzeit einstellbar ist.

Für die Wartungsarbeiten ist es zweckmäßig, daß die Filterbaueinheiten in Einbaustellung insbesondere durch Sprengringe, die mehrfach verwendbar sind, arretierbar und auswechselbar sind und daß das jeweils zugehörige Filtergut recycelbar ist. Dabei wird eine besondere Berücksichtigung der Umweltfreundlichkeit des Rauchgasreinigungssystems erreicht.

Zweckmäßig weisen die Filterbaueinheiten Rollen oder Kufen auf und sind schubladenförmig ausgebildet.

In einer vorteilhaften Ausgestaltung ist vorgesehen, daß eine Regelvorrichtung vorhanden ist, die in Abhängigkeit von dem über den Temperatursensor aufgenommenen Meßwert für die Abgastemperatur diese durch Veränderung der Wasserzufuhr der Art regelt, daß die Abgastemperatur 65°C nicht überschreitet.

Dabei ist es zweckmäßig, daß mindestens ein biologisch wirksamer Filter ein Feuchtigkeitsmembransystem aufweist.

Zur Reinigung des Rauchgases von toxischen Stoffen ist es vorteilhaft, daß mindestens ein biologisch wirksames Filter eine den PCDD und PCDD/F (Dioxine) Gehalt der Rauchgase reduzierende Mikroflora enthält.

In einer Ausgestaltung der Erfindung ist es zweckmäßig, daß der Kamin zur Vergrößerung seines Querschnitts einen trichterförmigen Einsatz aufweist.

Weiter ist in einer vorteilhaften Ausgestaltung vorgesehen, daß ein Regenwasserauffangbecken vorhanden ist, das mit der mindestens einen Rohrleitung zur Berieselung des mindestens einen biologisch wirksamen Filters verbindbar ist. Damit wird dem Umweltschutz weiter dadurch Rechnung getragen, daß der Einsatz von Trinkwasser minimiert wird.
Dazu ist es zweckmäßig, daß ein mit dem Wasserversorgungsnetz verbindbarer Wassertank vorhanden ist, der durch eine Leitung mit dem Regenwasserauffangbecken verbindbar ist und daß eine Regelungsvorrichtung vorhanden ist, die die Zufuhr von Wasser aus dem Wasserversorgungsnetz der Art regelt, daß bei Unterschreiten eines vorgebbaren Mindestwertes des Wassers aus dem Regenwasserauffangbecken Wasser aus dem Wasserversorgungsnetz zugebbar ist.

Zur Sicherung eines frostfreien Winterbetriebes ist es vorteilhaft, daß die mindestens eine Rohrleitung zur Berieselung des biologisch wirksamen Filters zur Wasservorwärmung mindestens teilweise durch den Kamin verläuft. Dabei ist es zweckmäßig, daß alle im Freien verlegten Wasserleitungen ausreichend gegen Frosteinwirkung isoliert sind.

In einer weiteren Ausgestaltung ist zur Verbesserung der Kühlwirkung vorgesehen, daß ein das Gehäuse umgebender, einseitig eine Öffnung aufweisender, um eine senkrechte Achse drehbar gelagerter Mantel vorhanden ist, der an der der Öffnung gegenüberliegenden Seite eine Windrichtungsfahne aufweist. Dadurch wird erreicht, daß sich die Öffnung dem Wind entgegenstellt und diesen in den Raum zwischen Mantel und Gehäuse leitet und dadurch zur Kühlung beiträgt.

Weiter ist vorteilhaft vorgesehen, daß ein in Strömungsrichtung vor dem ersten biologisch wirksamen Filter angeordneter Wärmetauscher zur Kühlung des Rauchgases vorhanden ist.

Zweckmäßig ist zur Unterstützung des Wärmeüberganges vorgesehen, daß hinter dem Ventilator ein Lochblech zur Verwirbelung des Rauchgases angeordnet ist.

In einer weiteren Ausgestaltung ist vorgesehen, daß ein seitlich vom Gehäuse angeordneter weiterer Ventilator vorhanden ist, mit dem Außenluft in den Rauchgasstrom nahe des Wärmetauschers zuführbar ist. Dadurch wird die Kühlwirkung mit einfachen Mitteln weiter verbessert.

Vorteilhaft ist weiter ein Windrad vorgesehen, mit dem mindestens ein Ventilator antreibbar ist, wobei zweckmäßig eine Regelvorrichtung vorhanden ist, durch die bei Erreichen einer vorgebbaren Drehzahl des Windrades dieses mit dem mindestens einen Ventilator wirkungsmäßig verbindbar ist. Dadurch wird vorhandene Windenergie genutzt, ohne daß auf Energie aus dem Leitungsnetz zurückgegriffen werden muß.

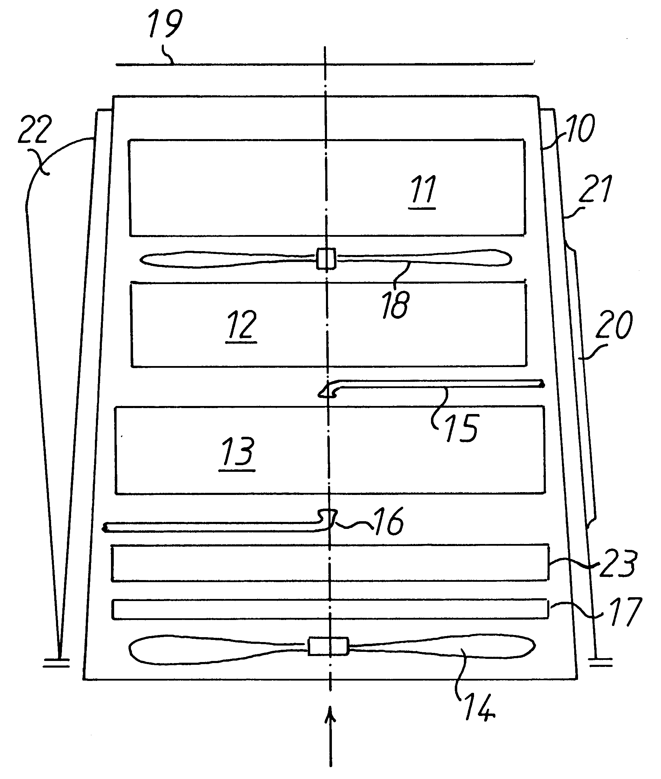

Eine Ausgestaltung der Erfindung wird nunmehr anhand einer Zeichnung mit einer einzigen Figur näher erläutert.

Sie zeigt äußerst schematisch eine Seitenansicht eines Rauchgasreinigungssystems, wobei die dem Betrachter zugewendeten Teile des Gehäuses und Mantels fortgelassen sind.

Die Figur zeigt ein kegelstumpfförmig, sich nach oben konisch verjüngendes Gehäuse 10, in dem übereinander angeordnete Filterbaueinheiten 11, 12, 13 angeordnet sind. Die Filterbaueinheiten 11 und 12 sind mit Aktivkohle als Filtergut beschickt, während die Filterbaueinheit 13 eine biologisch wirksame Filterbaueinheit mit mit Bakterien angereicherten Humus und Tropf- oder Füllkörpern als Filtergut ist.

Das in Pfeilrichtung in das Gehäuse 10 einströmende Rauchgas wird von einem um eine senkrechte Achse drehbar antreibbaren Ventilator 14 erfaßt und durch die nachfolgenden Elemente gedrückt.

In Strömungsrichtung oberhalb des Ventilators 14 ist ein Staub- und Rußfiltersystem 17 angeordnet, das eine Grobreinigung des Rauchgases durchführt.

Danach ist ein Wärmetauscher 23 angeordnet, der eine Vorabkühlung der Rauchgase durchführt. Der Wärmetauscher kann als Rohr- oder Rippenwärmetauscher ausgeführt sein.

Oberhalb des Wärmetauschers 23 ist eine nach oben gerichtete Düse 16 angeordnet, der Wasser durch eine Rohrleitung zugeführt wird. Mit dem aus der Düse 16 ausströmenden Wasser wird der Gasstrom angefeuchtet.

Danach trifft der Gasstrom auf das biologisch wirksame Filter 13, das von oben durch eine Düse 15 mit Wasser berieselt wird.

Oberhalb der einen Filterbaueinheit 12 ist ein zweiter, um eine senkrechte Achse drehbar antreibbarer Ventilator 18 angeordnet, der eine weitere Beschleunigung des Gasstromes bewirkt, der danach durch die zweite Filterbaueinheit 11 strömt, bevor er den Mantel 10 verläßt. Die obere Decke des Gehäuses 10 ist als Decke 19 aus lichtdurchlässigem, regendichtem Material ausgebildet.

Das Gehäuse 10 umgibt ein kegelstumpfförmig ausgebildeter Mantel 21, der um eine senkrechte Achse drehbar und konzentrisch zum Gehäuse 10 gelagert ist. Der Mantel 21 weist eine Öffnung 20 auf, in die Wind einströmt, welcher danach den Raum zwischen Gehäuse 10 und Mantel 21 umströmt und nach oben oder nach unten austritt. An der der Öffnung entgegengesetzten Seite ist eine Windfahne 22 angebracht, die bewirkt, daß sich der Mantel 21 in den Wind dreht.

Das Austauschen des Filtergutes erfolgt je nach Bedarf, wobei sich ein Wechselzeitraum von ein bis zwei Jahren als zweckmäßig erwiesen hat.

Das erfindungsgemäße Rauchgasreinigungssystem ist auf einen vorhandenen Kamin aufsetzbar, alternativ kann es auch davon beabstandet aufgestellt werden und wird dann durch eine entsprechende Rohrleitung verbunden.

Besonders vorteilhaft ist es, daß Mittel zur solaren Energieerzeugung wie Solarzellen vorhanden sind, mit denen mindestens ein Ventilator antreibbar ist und die die Energie für die Sensoren, Pumpen etc. erzeugen.

## Patentansprüche

1. Kaminaufsatz für Kleinfeueranlagen mit einem Biofilter nach Patentanmeldung P 42 09 225.6,
dadurch gekennzeichnet,
daß der Biofilter als Filtermaterial mit Bakterien angereicherten Humus enthält.

2. Kaminaufsatz nach Anspruch 1, dadurch gekennzeichnet, daß oberhalb des Biofilters mindestens eine Rohrleitung mit nach unten gerichteten Düsen zur Berieselung des Biofilters mit Wasser angeordnet ist.

3. Kaminaufsatz nach Anspruch 1 oder 2, dadurch gekennzeichnet, daß unter dem Biofilter mindestens eine nach oben gerichtete Düse zur Befeuchtung des Luftstromes angeordnet ist.

4. Kaminaufsatz nach einem der Ansprüche 1 bis 3, dadurch gekennzeichnet, daß unterhalb des Biofilters ein Staub- und Rußfilter vorhanden ist, der für Reinigungszwecke entnehmbar ist.

5. Kaminaufsatz nach einem der Ansprüche 1 bis 4, dadurch gekennzeichnet, daß oberhalb oder zwischen den Aktivkohlefiltern ein zweiter Ventilator angebracht ist.

6. Kaminaufsatz nach einem der Ansprüche 1 bis 5, dadurch gekennzeichnet, daß die Decke des Aufsatzes aus lichtdurchlässigem Material besteht und sich darunter ein bepflanzbarer Freiraum mit Regenwasserzutrittsdüsen und einem Abfluß befindet.

7. Kaminaufsatz nach einem der Ansprüche 1 bis 6, dadurch gekennzeichnet, daß strömungsmäßig hinter dem Staub- und Rußfilter eine die Luft gleichrichtende Membran vorhanden ist.

8. Kaminaufsatz nach einem der Ansprüche 1 bis 7, dadurch gekennzeichnet, daß das Gehäuse nach oben konisch verläuft.

9. Kaminaufsatz nach einem der Ansprüch 1 bis 7, dadurch gekennzeichnet, daß das Gehäuse nach unten konisch verläuft.

10. Kaminaufsatz nach einem der Ansprüche 1 bis 9, dadurch gekennzeichnet, daß das Gehäuse mindestens einen Biosensor und/oder einen Feuchtigkeitssensor und/oder einen Temperatursensor aufweist.

11. Kaminaufsatz nach einem der Ansprüche 1 bis 10, dadurch gekennzeichnet, daß neben dem Aufsatz zwei Stangen für die Auflage von zu wechselnden Filtern vorhanden sind.

12. Kaminaufsatz nach einem der Ansprüche 1 bis 11, dadurch gekennzeichnet, daß die Aktivkohlefilter Farbindikatoren zur Feststellung ihres Ladezustandes aufweisen.

13. Kaminaufsatz nach einem der Ansprüche 1 bis 12, dadurch gekennzeichnet, daß er ein Identifizierungssystem enthält, auf das zugleich die Wartungsdaten aufgegeben werden können.
